Europäisches Patentamt

European Patent Office

Office européen des brevets

(19)

(11) Veröffentlichungsnummer: **0 558 536 B1**

## (12) EUROPÄISCHE PATENTSCHRIFT

(45) Veröffentlichungstag der Patentschrift: **22.02.95**

(51) Int. Cl.⁶: **B60K 41/06**

(21) Anmeldenummer: **91919866.3**

(22) Anmeldetag: **18.11.91**

(86) Internationale Anmeldenummer:
**PCT/EP91/02167**

(87) Internationale Veröffentlichungsnummer:
**WO 92/09449 (11.06.92 92/13)**

(54) **VERFAHREN ZUR STEUERUNG DES DREHMOMENTS EINER BRENNKRAFTMASCHINE.**

(30) Priorität: **22.11.90 DE 4037092**

(43) Veröffentlichungstag der Anmeldung:
**08.09.93 Patentblatt 93/36**

(45) Bekanntmachung des Hinweises auf die
Patenterteilung:
**22.02.95 Patentblatt 95/08**

(84) Benannte Vertragsstaaten:
**DE FR GB IT SE**

(56) Entgegenhaltungen:
**DE-A- 3 830 938**
**DE-A- 3 841 400**
**US-A- 4 682 667**
**US-A- 4 948 481**

(73) Patentinhaber: **ZAHNRADFABRIK FRIEDRICHS-HAFEN AG**
**Löwentaler Strasse 100,**
**Postfach 2520**
**D-88015 Friedrichshafen (DE)**

(72) Erfinder: **RUNGE, Wolfgang**
**Goethestrasse 7**
**D-7980 Ravensburg (DE)**
Erfinder: **HENGSTLER, Hans-Dieter**
**Hottenlochweg 2**
**D-7980 Ravensburg (DE)**

(74) Vertreter: **Raue, Reimund et al**
**ZF FRIEDRICHSHAFEN AG**
**D-88038 Friedrichshafen (DE)**

EP 0 558 536 B1

**Beschreibung**

Die Erfindung bezieht sich auf ein Verfahren zur Steuerung des Drehmoments einer Brennkraftmaschine entsprechend den im Oberbegriff des Anspruchs 1 aufgeführten Merkmalen, wie sie aus der DE-A-3830938 bekannt sind.

Ein Verfahren zur Steuerung des Drehmoments einer Brennkraftmaschine ist weiterhin bekannt aus der DE-C 29 35 916. Danach soll ein beim Schaltvorgang des automatischen Getriebes auftretender Schaltruck dadurch vermindert werden, daß während des Schaltvorgangs das Drehmoment der Brennkraftmaschine reduziert wird. Neben der Verminderung des Schaltrucks kann durch das während des Schaltablaufs reduzierte Drehmoment der Brennkraftmaschine auch die Schleifzeit der am Schaltvorgang beteiligten Reibungskupplungen des automatischen Getriebes verringert werden, so daß ein geringerer Verschleiß und eine geringere Erwärmung der Reibelemente auftritt. Die Steuereinrichtung für die Brennkraftmaschine ist mit einer Erkennungsschaltung ausgestattet, die während eines Schaltvorgangs aus der Getriebesteuerung ein Schaltsignal erhält. In einem Speicher der Steuereinrichtung für die Brennkraftmaschine sind Kennfelder abgelegt, nach denen der Zündwinkel und/oder die Einspritzimpulsbreite last- und drehzahlabhängig gesteuert werden. Wird der Erkennungsschaltung der Steuereinrichtung der Brennkraftmaschine ein Schaltsignal zugeführt, so schaltet die Steuereinrichtung selbsttätig auf ein weiteres Kennfeld um, in welchem durch eine Verstellung des Zündwinkels in Richtung "spät" oder eine Verringerung der eingespritzten Kraftstoffmenge das Drehmoment der Brennkraftmaschine reduziert ist. Probleme bereitet dabei die exakte Ermittlung des Zeitpunkts der Reduzierung des Drehmoments. Außerdem sind eine derartige Speicherung unterschiedlicher Kennfelder und eine Kennfeldumschaltung relativ aufwendig. Schließlich ist festzustellen, daß eine derartige Steuerung des Antriebsdrehmoments der Brennkraftmaschine allein aufgrund von Schaltsignalen der Getriebesteuerung in modernen Antriebskonzepten nicht ausreicht, zumal das von der Brennkraftmaschine auf das automatische Getriebe übertragene Drehmoment auch eine große Bedeutung für das Fahrverhalten des Kraftfahrzeugs hat und sich auf den Kraftstoffverbrauch auswirkt.

Es ist daher Aufgabe der vorliegenden Erfindung, ein Verfahren zur Steuerung des Drehmoments einer Brennkraftmaschine zu schaffen, mit dem trotz eines geringen Regelungsaufwands das Drehmoment der Brennkraftmaschine stets auf seinen günstigsten Wert eingestellt werden kann.

Diese Aufgabe wird mit einem Verfahren nach dem Patentanspruch 1 gelöst. Nach dem erfindungsgemäßen Verfahren wird ein dezentrales Mikroprozessorsystem verwendet, bei dem über serielle oder parallele Schnittstellen die einzelnen Mikroprozessoren der Steuereinheit der Brennkraftmaschine und der Getriebesteuereinrichtung Daten austauschen. Über die Schnittstellen werden ständig die aktuellen Daten der Getriebesteuereinrichtung und entsprechende Anforderungen an die Steuereinrichtung für die Brennkraftmaschine weitergegeben, die sich dadurch ihrerseits in idealer Weise an die Getriebesteuereinheit anpassen kann. Somit kann die Getriebesteuereinheit der Steuereinrichtung der Brennkraftmaschine jederzeit in dem zyklischen Zeittakt eine gewünschte Drehmomentreduzierung oder -erhöhung anhand von Prozentwerten übermitteln. Dabei wird erfindungsgemäß im Falle einer durch die Getriebesteuerung ermittelten Drehmomentänderung die über die Schnittstelle ausgegebene prozentuale Drehmomentanforderung nach einem Gradienten reduziert oder erhöht werden.

Weitere vorteilhafte Ausgestaltungen der Erfindung sind in den Unteransprüchen 2 bis 8 beschrieben.

Dabei kann nach Anspruch 2 der Gradient als Funktion aus einem Sollwert der Drehmomentanforderung, einem variablen Faktor der Drehmomentanforderung und einem Lastsignal ermittelt werden.

$$d_{PLF} = f \, (PLF2, \, PLF, \, Last)$$

Weiterhin ist gemäß Anspruch 3 vorgesehen, daß bei einer durch einen Schaltvorgang hervorgerufenen Drehmomentänderung der variable Faktor der Drehmomentanforderung vom ersten Greifen oder Lösen von am Schaltvorgang beteiligten Reibelementen ausgegeben wird.

Gemäß Anspruch 4 soll die Reduzierung bzw. Erhöhung bis zum Soll-Endwert der Drehmomentanforderung erfolgen, wobei der einer bestimmten Fahrweise angepaßte Soll-Endwert errechnet wird aus dem variablen Faktor minus dem Produkt aus variablem Faktor und einem Gewichtungsfaktor, der seinerseits eine Funktion aus Lastanforderungen und Drehzahlen ist, also: $PLF2 = PLF \pm PLF \times Fak \, (T)$, wobei $Fak \, (T) = f \, (n_1, \, n_2, \, Last)$.

Gemäß Anspruch 5 soll die Getriebesteuerung reduzierte Momentenanforderungen im Antriebsstrang erfassen, die aufgrund von Radschlupf der Antriebsräder des Kraftfahrzeugs eintreten. Neben reduzierten Drehmomentanforderungen, die bei Schlupfzuständen der Schaltkupplungen des automatischen Getriebes auftreten, können somit auch reduzierte Drehmomentanforderungen erfaßt werden, deren Ursache Radschlupf an den Antriebsrädern des Kraftfahrzeugs ist. Auf eine separate Antriebsschlupf-Regeleinrichtung kann folglich verzichtet werden.

Dem Anspruch 6 zufolge soll während einer Überschneidungsschaltung zweier Reibelemente kurzfristig das Motormoment durch eine erhöhte Momentenanforderung angehoben sein, so daß ein während dieser Überschneidungsschaltung auftretender Abfall des Abtriebsdrehmoments ausgeglichen werden kann. Bei einer Überschneidungsschaltung zweier Reibungskupplungen bzw. -bremsen des automatischen Getriebes, die ohne Zugkraftunterbrechung mit zunehmendem Kupplungsmoment der einen und abnehmendem Kupplungsmoment der anderen Reibungskupplung erfolgt, wird kurzzeitig im Bereich der Überschneidungsschaltung das Abtriebsdrehmoment reduziert. Diese Reduzierung des Abtriebsdrehmoments soll erfindungsgemäß gemäß Anspruch 7 durch ein erhöhtes Drehmoment der Brennkraftmaschine ausgeglichen werden, wobei das Drehmoment kurzfristig den maximalen Wert überschreiten kann. Eine derartige kurzfristige Anhebung des Drehmoments der Brennkraftmaschine soll vorzugsweise durch eine vergrößerte Einspritzimpulsbreite der Kraftstoff-Einspritzanlage erzielbar sein.

Schließlich soll gemäß Anspruch 8 das Getriebesteuergerät neben der prozentualen Momentenanforderung als erste Stellgröße einen Kupplungsdruck der Schaltelemente als zweite Stellgröße erfassen, wobei aufgrund der beiden Stellgrößen das Abtriebsmoment des Getriebes und Schleifzeiten der Schaltelemente unabhängig beeinflußbar sein sollen.

Beim Stand der Technik wird durch eine Kennfeldumschaltung der Steuereinrichtung der Brennkraftmaschine das Drehmoment um einen feststehenden prozentualen Wert reduziert. Der Nachteil davon ist, daß nur der Kupplungsdruck als Stellgröße zur Verfügung steht, um auf die beiden Ausgangsgrößen (Regelgrößen) Abtriebsdrehmoment und Schleifzeit Einfluß zu nehmen. So kann es z. B. passieren, daß der Verlauf des Abtriebsdrehmoments günstig ist, die Schleifzeit aber zu kurz ist.

Führt man entsprechend der vorliegenden Erfindung die prozentuale Drehmomentanforderung PLF ein, die während der Schaltung vom Getriebesteuergerät stetig verstellt werden kann, so hat man stattdessen zwei Stellgrößen, nämlich den Kupplungsdruck und die Drehmomentanforderung PLF, um die beiden Ausgangsgrößen Abtriebsdrehmoment und Schleifzeit unabhängig voneinander beeinflussen zu können. Muß man beispielsweise den Kupplungsdruck erhöhen, um das Abtriebsdrehmoment zu erhöhen, so kann man durch gleichzeitiges Erhöhen der prozentualen Drehmomentanforderung PLF erreichen, daß die Schleifzeit konstant bleibt. Es gilt

$$T_K = K_K \cdot p_K,$$

wobei

$K_K$ = Kupplungskonstante  
$P_K$ = Kupplungsdruck  
$T_K$ = Kupplungsmoment

$$T_1 = T_{M100} \cdot PLF,$$

wobei

$T_{M100}$ = Drehmoment der Brennkraftmaschine (100-%-Wert)  
$PLF$ = prozentuale Drehmomentanforderung $0 \leq PLF \leq 1$

Während einer Hochschaltung wird die Getriebeeingangsdrehzahl $n_1$ mit Hilfe der entsprechend zugeschalteten Kupplung auf die Synchrondrehzahl $n_{Syn}$ des neuen Ganges heruntergezogen: $\dot{n}_1 = dn_1/dt$

Dieses Herunterziehen der Drehzahl der Getriebeingangswelle auf die Synchrondrehzahl $n_{Syn}$ erfolgt mit einem bestimmten Gradienten $n_1$ innerhalb einer bestimmten Zeit $t_S$ (Schleifzeit). Das Abtriebsdrehmoment $T_{ab}$ ergibt sich aus dem Kupplungsmoment $T_K$ und einer Gangübersetzung I:

$$T_{ab} = i \cdot T_K$$

Weiterhin gilt:

$$I_1 \cdot \dot{n}_1 = T_1 - T_K \text{ (Momentenbilanz)}$$

Dabei ist

$I_1$ = Trägheitsmoment an der Eingangswelle  
$\dot{n}_1$ = Gradient für die Änderung der Drehzahl der Eingangswelle  
$T_1$ = Eingangsdrehmoment an der Eingangswelle  Es gilt weiterhin

$$t_S = \frac{\triangle n}{|\dot{n}_1|} = \frac{\triangle n \cdot I_1}{|T_1 - T_K|}$$

Wesentliche kennzeichnende Größen (Ausgangsgrößen) der Schaltung sind:
Abtriebsdrehmoment $T_{ab}$ (wesentlich verantwortlich für die Schaltqualität):

$T_{ab} = i \cdot K_K \cdot p_K$

Schleifzeit $t_S$ (wesentlich für Kupplungsbelastung):

$$t_S = \frac{n \cdot I_1}{|T_{M100} \cdot PLF - K_{IC} \cdot P_K|}$$

Die Erfindung ist nicht auf die Merkmalskombination der Ansprüche beschränkt. Für den Fachmann ergeben sich weitere sinnvolle Kombinationsmöglichkeiten von Ansprüchen und einzelnen Anspruchsmerkmalen aus der Aufgabenstellung.

Zur weiteren Erläuterung der Erfindung wird auf die Zeichnung verwiesen, in der die Funktion des erfindungsgemäßen Verfahrens dargestellt ist. Es zeigen:

Fig. 1     ein Blockschaltbild mit einer Getriebesteuereinrichtung und einer Steuereinrichtung für eine Brennkraftmaschine;

Fig. 2     ein Flußdiagramm zur Berechnung eines prozentualen Momentenfaktors und

Fig. 3     ein Ablaufdiagramm einer während einer Getriebeschaltung der Steuereinrichtung der Brennkraftmaschine zugeleiteten Momentenanforderung.

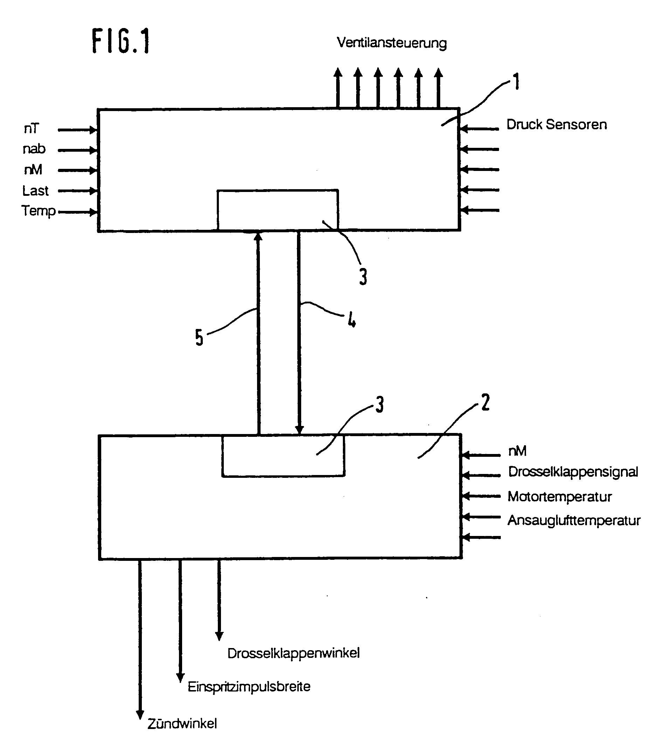

In der Fig. 1 ist mit 1 eine Getriebesteuereinrichtung bezeichnet, die über nicht näher dargestellte Sensoren eine Turbinendrehzahl $n_T$ eines hydrodynamischen Drehmomentwandlers, eine Getriebeabtriebsdrehzahl $n_{ab}$, eine Drehzahl einer Brennkraftmaschine $n_M$, ein Lastsignal und ein Temperatursignal der Getriebeöltemperatur erfaßt. Die Getriebesteuereinrichtung weist einen Mikroprozessor auf, der diese Eingangsdaten nach vorbestimmten logischen Regeln verarbeitet und nicht näher dargestellte Schaltventile eines elektro-hydraulischen Steuersystems eines automatischen Getriebes ansteuert. Diese Steuerventile beherrschen reibschlüssige Schaltelemente des automatischen Getriebes, die als Reibkupplungen oder -bremsen ausgebildet sind.

Weiterhin ist dem Blockschaltbild eine Steuereinrichtung 2 für eine nicht dargestellte Brennkraftmaschine zu entnehmen, welche das automatische Getriebe antreibt. Diese Steuereinrichtung 2 weist ebenfalls einen Mikroprozessor auf, dem über Sensoren folgende Betriebsparameter der Brennkraftmaschine zugeleitet werden: Motordrehzahl $n_M$, Drosselklappensignal, Motortemperatur und Ansauglufttemperatur. Der Mikroprozessor verarbeitet diese Eingangsgrößen nach vorgegebenen logischen Regeln und korrigiert aufgrund dieser Werte einen Drosselklappenwinkel einer im Ansaugluftstrom angeordneten Drosselklappe, eine Einspritzimpulsbreite einer Kraftstoff-Einspritzanlage sowie einen Zündwinkel einer Zündanlage.

Die Getriebesteuerung 1 und die Steuereinrichtung 2 der Brennkraftmaschine weisen eine Schnittstelle 3 auf. Über diese Schnittstelle 3 werden mittels einer Signalleitung 4 der Steuereinrichtung 3 stetig prozentuale Momentenanforderungen aus der Getriebesteuereinrichtung 1 zugeleitet. Über eine weitere Signalleitung 5 können Informationen aus der Steuereinrichtung 2 der Brennkraftmaschine auf die Getriebesteuereinrichtung 1 übertragen werden. Die Steuereinrichtung 2 verarbeitet die über die Signalleitung 4 übertragene Momentenanforderung und beeinflußt entsprechend den Drosselklappenwinkel, die Einspritzimpulsbreite oder den Zündwinkel.

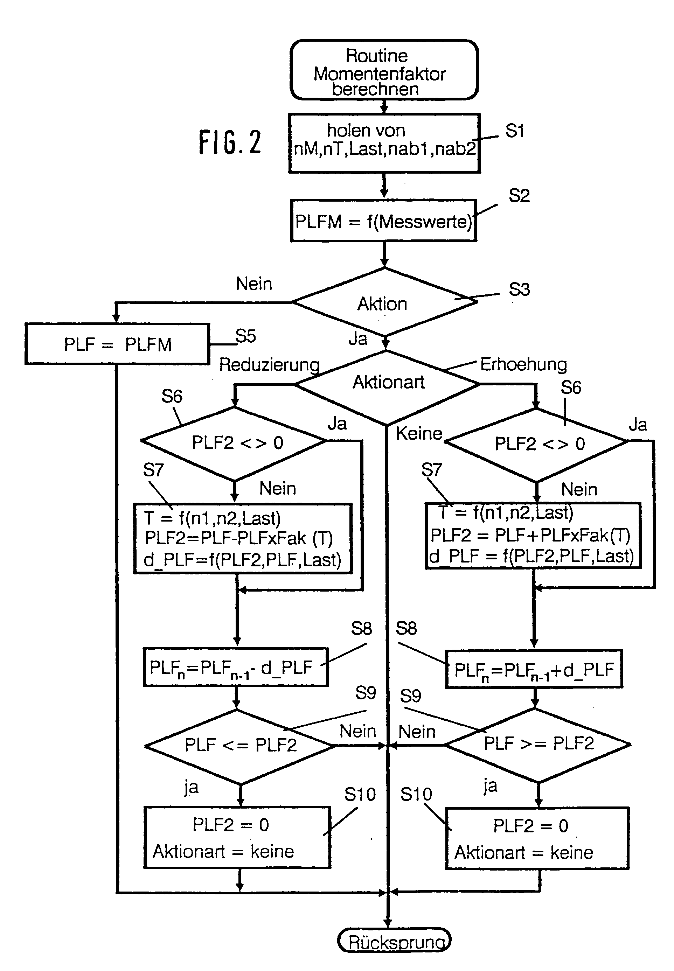

Das in Fig. 2 dargestellte Flußdiagramm zeigt eine Routine zur Berechnung eines prozentualen Momentenfaktors PLFM. Diese Routine wird zyklisch nach einem Programmzyklus bearbeitet. Im Schritt S1 werden alle für die Berechnung der prozentualen Momentenanforderung notwendigen Meßwerte geholt. Es handelt sich dabei vorzugsweise um die Drehzahl der Brennkraftmaschine $n_M$, die Drehzahl der Turbine des Drehmomentwandlers $n_T$, ein vom Fahrer am Fahrpedal eingestellter Wert der Lastanforderung, eine Abtriebsdrehzahl $n_{ab1}$ des Automatgetriebes sowie eine Abtriebsdrehzahl $n_{ab2}$ an Antriebsrädern des Kraftfahrzeugs. Im Schritt S2 wird dann nach einem bestimmten Algorithmus als Funktion dieser Meßwerte $n_M$, $n_T$, Last, $n_{ab1}$, $n_{ab2}$ ein prozentualer Momentenfaktor PLFM errechnet.

Wie bereits anhand der Fig. 1 erläutert, wird dieser errechnete Wert über die Schnittstelle 3 von der Getriebesteuereinrichtung 1 zur Steuereinrichtung 2 für die Brennkraftmaschine übertragen. Der Steuereinrichtung 2 der Brennkraftmaschine wird der Empfang neuer Werte über Interrupt mitgeteilt. Der Wert in der Getriebesteuereinrichtung 1 bleibt solange erhalten, bis ein neuer Wert errechnet wurde.

Wird nun im Schritt S3 eine Aktion erkannt, so wird im nächsten Schritt S4 die Aktionsart abgefragt. Liegt keine Aktion vor, so wird der errechnete Faktor der Ausgabevariablen PLF über den entsprechenden Zweig Schritt S5 zugewiesen.

Bei der Aktionsart nach Schritt S4 kann es sich um eine Reduzierung oder eine Erhöhung der Momentenanforderung handeln. Ganz gleich, ob es sich bei der Aktionsart um eine Reduzierung oder Erhöhung der Momentenanforderung handelt, laufen die nachfolgenden Berechnungsschritte völlig identisch ab:

In einem Schritt S6 wird jeweils überprüft, ob ein Sollwert in der Momentenanforderung PLF2 noch mit dem Wert 0 belegt ist. Ist dies der Fall, also ist PLF2 nicht kleiner/größer als 0, so müssen in einem anschließenden Schritt S7 noch der Sollwert PLF2 und ein Gradient $d_{PLF}$, mit dem das Motormoment reduziert bzw. erhöht werden soll, ermittelt werden. Bei der Berechnung des Sollwertes der Momentenanforderung PLF2 ist ein Gewichtungsfaktor Fak (T) eingeführt, der sich als Funktion der Abtriebsdrehzahlen n1 und n2 sowie der Last errechnet. Liegt im Schritt S6 unmittelbar ein Sollwert PLF2 vor oder wurde dieser Sollwert PLF2 im nachfolgenden Schritt S7 ermittelt, so wird im Schritt S8 der aktuelle Momentenfaktor $PLF_n$ jeweils zyklisch ermittelt, indem der jeweils zuletzt errechnete Momentenfaktor $PLF_{n-1}$ durch Addition des Gradienten $d_{PLF}$ bis zum Sollwert PLF2 reduziert oder erhöht wird. Im anschließenden Schritt S9 wird kontrolliert, ob der Wert $PLF_n$ auf den Sollwert PLF2 abgeglichen ist. Im Schritt S10, von dem aus wiederum der Rücksprung erfolgt, wird durch Einstellung von PLF2 = 0 und Aktionsart = keine angezeigt, daß die Aktionsart abgeschlossen ist und der erreichte Wert gehalten wird. Ist die Aktion abgeschlossen, wird der Wert mit den gemessenen Parametern errechnet und ausgegeben.

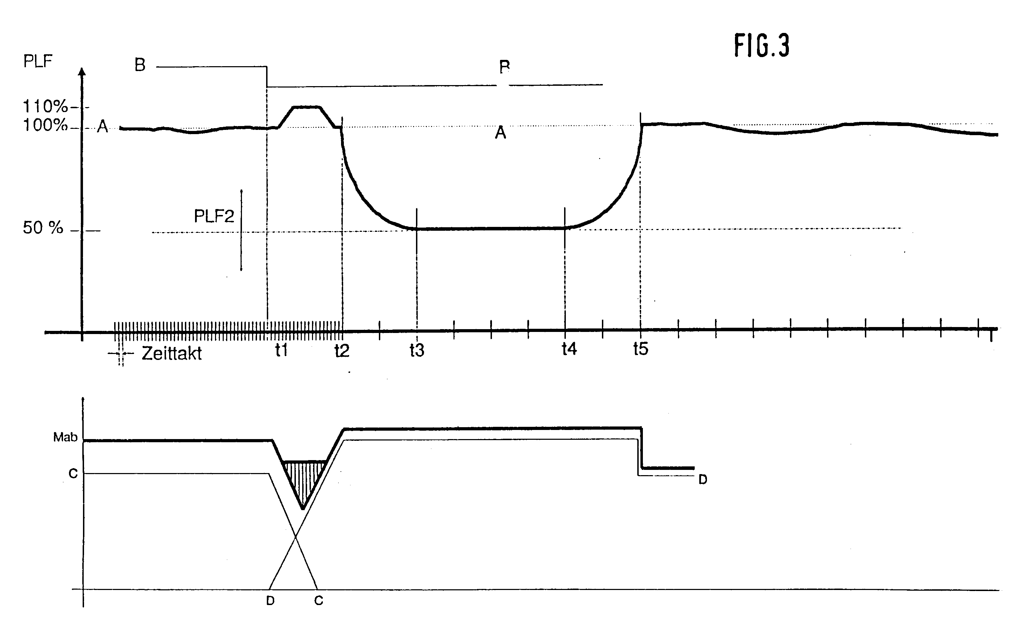

In der Fig. 3 ist anhand eines Kurvenverlaufs dargestellt, wie sich die auf die Steuereinrichtung 2 der Brennkraftmaschine übertragene Momentenanforderung vor, während und nach einem Schaltvorgang des automatischen Getriebes verändert. In diesem Ablaufdiagramm ist auf der Ordinate die prozentuale Momentenanforderung PLF aufgetragen, während die Abszisse einen bestimmten Zeittakt T verdeutlicht. Eine Linie A-A zeigt die auf die Steuereinrichtung der Brennkraftmaschine übertragene Momentenanforderung PLF.

Oberhalb dieser Linie A-A verläuft eine Linie B-B, anhand welcher ein Schaltsignal während eines Zeitpunkts t1 verdeutlicht wird. In einem unterhalb des Diagramms für die Momentenanforderung PLF angeordneten weiteren Diagramm ist das jeweilige Drehmoment $M_{ab}$ eingetragen, das von zwei an einem Schaltvorgang beteiligten Kupplungen übertragen wird. Die Kurve C-C zeigt das jeweilige Drehmoment einer Kupplung, die vor einem Schaltvorgang eingerückt ist. Während des Schaltvorgangs wird die Kupplung ausgerückt und eine zweite Kupplung, deren Drehmomentverlauf in der Kurve D-D dargestellt ist, eingerückt. Bei dieser Lastschaltung, die zu einer Hochschaltung des automatischen Getriebes in eine höhere Gangstufe führt, findet eine Überschneidungsschaltung statt, während der sich beide Kupplungen im schleifenden Eingriff befinden. Während dieser Schleifzeit tritt im Antriebsstrang ein Verlustmoment ein, das im Zeitraum zwischen den Zeittakten t1 bis t2 durch eine gezielte Anhebung der Momentenanforderung ausgeglichen wird.

Aufgrund der Schaltaktivität wird die auf die Steuereinheit der Brennkraftmaschine übertragene Drehmomentanforderung entsprechend der Kurve A-A ab dem Zeittakt t2 bis auf den Sollwert PLF2 reduziert, wobei diese Reduzierung nach dem durch den Kurvenverlauf dargestellten Gradienten erfolgt. Zwischen t4 und t5 wird nach diesem Gradienten der Sollwert PLF2 wiederum auf etwa 100 % angehoben. Die Drehmomentanforderung wird ständig von der Getriebesteuerung auf die Steuerung der Brennkraftmaschine übertragen, so daß sich nach dem Zeittakt t5 ein entsprechender um 100 % schwankender Verlauf der Linie A-A einstellt. Eine veränderte Drehmomentanforderung kann auch von der Getriebesteuerung 1 auf die Steuereinrichtung 2 der Brennkraftmaschine übertragen werden, wenn aufgrund eines Schlupfes der Antriebsräder ein Drehmomentabfall registriert wird.

**Patentansprüche**

1. Verfahren zur Steuerung des Drehmoments einer Brennkraftmaschine, die ein Kraftfahrzeug über ein automatisches Getriebe antreibt, mit einer Steuereinrichtung (2) für die Brennkraftmaschine, die aufgrund von Drehzahl-, Last- und gegebenenfalls Temperatursignalen einen Zündwinkel einer Zündanlage und/oder eine Einspritzimpulsbreite einer Kraftstoff-Einspritzanlage steuert, mit einer Getriebesteuereinrichtung (1) für das automatische Getriebe, die aufgrund von Drehzahl- und Lastanforderungssignalen Schaltvorgänge des automatischen Getriebes steuert, wobei Rechnersysteme der Getriebesteuereinrichtung (1) und der Steuereinrichtung (2) der Brennkraftmaschine über Schnittstellen (3) stetig kommunizieren, wobei der Steuereinrichtung (2) der Brennkraftmaschine aus der Getriebesteuerung (1) in einem zyklischen Zeittakt eine prozentuale Drehmomentanforderung (PLF) zugeleitet wird, aufgrund welcher die Steuereinrichtung (2) das Drehmoment der Brennkraftmaschine selbsttätig beeinflußt, dadurch **gekennzeichnet,** daß im Falle einer durch die Getriebesteuerung (1) ermittelten Drehmomentänderung die über die Schnittstelle (3) ausgegebene prozentuale Drehmomentanforderung (PLF) nach einem Gradienten ($d_{PLF}$) reduziert oder erhöht wird.

2. Verfahren nach Anspruch 1, dadurch **gekennzeichnet,** daß der Gradient ($d_{PLF}$) als Funktion aus einem Soll-Endwert der Drehmomentanforderung (PLF2), einem variablen Faktor der Drehmomentanforderung (PLF) und einem Lastsignal wie folgt ermittelt wird:

$$d_{PLF} = f (PLF2, PLF, Last).$$

3. Verfahren nach Anspruch 2, dadurch **gekennzeichnet,** daß bei einer durch einen Schaltvorgang hervorgerufenen Drehmomentänderung der variable Faktor (PLF) der Drehmomentanforderung vom ersten Greifen oder Lösen von am Schaltvorgang beteiligten Reibelementen an ausgegeben wird.

4. Verfahren nach Anspruch 2, dadurch **gekennzeichnet,** daß die Reduzierung bzw. Erhöhung bis zum Soll-Endwert (PLF2) der Drehmomentanforderung erfolgt, wobei der einer bestimmten Fahrweise angepaßte Soll-Endwert (PLF2) errechnet wird aus dem variablen Faktor (PLF) minus dem Produkt aus variablem Faktor und einem Gewichtungsfaktor (Fak (T)), der seinerseits eine Funktion ist aus Lastanforderung und Drehzahlen ($n_1$, $n_2$), also:

$$PLF2 = PLF - PLF \times Fak (T), \text{ wobei } Fak (T) = f (n_1, n_2, Last).$$

5. Verfahren nach Anspruch 1, dadurch **gekennzeichnet,** daß die Getriebesteuerung (1) reduzierte Momentenanforderungen, die aufgrund von Radschlupf der Antriebsräder des Kraftfahrzeugs eintreten, erfaßt.

6. Verfahren nach Anspruch 3, dadurch **gekennzeichnet,** daß während einer Überschneidungsschaltung zweier Reibelemente über eine erhöhte Momentenanforderung (PLF2) kurzfristig das Drehmoment der Brennkraftmaschine angehoben wird, so daß ein dabei auftretender Abfall des Abtriebsdrehmoment ($T_{ab}$) ausgeglichen werden kann.

7. Verfahren nach Anspruch 6, dadurch **gekennzeichnet,** daß eine kurzfristige Erhöhung des Drehmoments der Brennkraftmaschine auf einen oberhalb des maximalen Drehmoments (100 %) liegenden Wertes durch eine Veränderung der Einspritzimpulsbreite der Kraftstoff-Einspritzanlage erfolgt.

8. Verfahren nach Anspruch 1, dadurch **gekennzeichnet,** daß die Getriebesteuereinrichtung (1) neben der prozentualen Momentenanforderung (PLF) als erste Stellgröße einen Kupplungsdruck ($p_K$) der Schaltelemente als zweite Stellgröße erfaßt und daß aufgrund der beiden Stellgrößen (PLF, $p_K$) das Abtriebsdrehmoment ($T_{ab}$) des Getriebes und Schleifzeiten ($T_S$) der Schaltelemente unabhängig voneinander beeinflußbar sind.

**Claims**

1. Process for controlling the torque of an internal combustion engine which drives a motor vehicle by means of an automatic gearbox with a control device (2) for the internal combustion engine which controls an ignition angle of an ignition system and/or an injection pulse width of a fuel-injection system on the basis of speed, load and optionally temperature signals, having a gearbox control device (1) for the automatic gearbox, which controls gear changes of the automatic gearbox on the basis of speed and load requirement signals, computer systems of the gearbox control device (1) and the control device (2) of the internal combustion engine communicating constantly by means of interfaces (3), wherein a percentage torque demand (PLF) is supplied to the control device (2) of the internal combustion engine in a cyclical time pulse from the gearbox control (1), on the basis of which the control device (2) automatically influences the torque of the internal combustion engine, characterized in that, in the event of a change in torque being detected by the gearbox control (1) the percentage torque demand (PLF) output via the interface (3) is reduced or increased according to a gradient ($d_{PLF}$).

2. Process according to claim 1, characterized in that the gradient ($d_{PLF}$) is determined as a function from a desired final value of the torque demand (PLF2), a variable factor of the torque demand (PLF) and a load signal as follows:

$$d_{PLF} = f \text{ (PLF2, PLF, load)}.$$

3. Process according to claim 2, characterized in that, in the event of a change in torque brought about by a gear change, the variable factor (PLF) of the torque demand is output from the moment the first gripping or releasing of friction elements involved in the gear change occurs.

4. Process according to claim 2, characterized in that the reduction or increase takes place up to the desired final value (PLF2) of the torque demand, the desired final value (PLF2), which is adapted to a specific manner of driving, being calculated from the variable factor (PLF) minus the product of the variable factor and a weighting factor (Fak (T)), which itself is a function of the load demand and rotational speed ($n_1$, $n_2$), hence:

$$PLF2 = PLF - PLF \times Fac \text{ (T)}, \text{ where Fak (T)} = f \text{ } (n_1, n_2, \text{load}).$$

5. Process according to claim 1, characterized in that the gearbox control (1) detects reduced moment demand which occur due to wheel-spin of the driving wheels of the motor vehicle.

6. Process according to claim 3, characterized in that during an overlapping change between two friction elements by means of an increased torque demand (PLF2) the internal combustion engine torque is increased briefly so that a drop arising in the output torque ($T_{ab}$) can be compensated for.

7. Process according to claim 6, characterized in that a short-term increase of the internal combustion engine torque to a value lying above the maximum torque (100 %), occurs as a result of a change in the injection pulse width of the fuel-injection system.

8. Process according to claim 1, characterized in that, in addition to the percentage torque demand (PLF) as a first regulating value, the gearbox control device (1) detects a clutch pressure ($P_k$) of the gear change elements as a second regulating value and that the output torque ($T_{ab}$) of the gearbox and slipping times ($T_s$) of the gear change elements can be influenced independently of one another due to the two regulating values (PLF, $P_k$).

**Revendications**

1. Procédé de régulation du couple d'un moteur à combustion interne qui entraîne un véhicule au moyen d'une transmission automatique, à l'aide d'une unité (2) de commande du moteur, qui commande un angle d'allumage d'un dispositif d'allumage et/ou une largeur d'impulsions d'injection d'un dispositif d'injection de carburant sur la base de signaux de régime, de charge et, le cas échéant, de température, et à l'aide d'une unité (1) de commande de la transmission automatique, qui commande des changements de vitesses dans la transmission automatique sur la base de signaux de régime et de demande de charge, où des systèmes calculateurs de l'unité de commande de la transmission (1) et de l'unité de commande du moteur (2) communiquent en permanence à travers des interfaces (3), et où l'unité de commande du moteur (2) reçoit de la commande de transmission (1), à une cadence cyclique, un pourcentage (PLF) de demande de couple sur la base duquel l'unité de commande du moteur (2) influence automatiquement le couple du moteur, **caractérisé** en ce que dans le cas d'une variation de couple déterminée par la commande de transmission (1), le pourcentage (PLF) de demande de couple délivré à travers l'interface (3) est réduit ou augmenté selon un gradient ($d_{PLF}$).

2. Procédé selon la revendication 1, **caractérisé** en ce que le gradient ($d_{PLF}$) est déterminé en fonction d'une valeur finale prescrite (PLF2) de la demande de couple, d'un facteur variable (PLF) de la demande de couple et d'un signal de charge :

$d_{PLF}$ = f (PLF2, PLF, charge).

3.  Procédé selon la revendication 2, **caractérisé** en ce que, lors d'une variation de couple produite par un changement de vitesses, le facteur variable (PLF) de la demande de couple est délivré dès l'instant où des éléments de friction intervenant dans le changement de vitesses commencent à s'engager ou se dégager.

4.  Procédé selon la revendication 2, **caractérisé** en ce que ladite réduction ou augmentation est faite jusqu'à la valeur finale prescrite (PLF2) de la demande de couple et en ce que la valeur finale prescrite (PLF2) adaptée à un mode de conduite déterminé est calculée à partir du facteur variable (PLF) moins le produit du facteur variable et d'un facteur de pondération (Fak (T)) qui est lui-même une fonction de la demande de charge et des régimes ($n_1$, $n_2$), c'est-à-dire :

    PLF2 = PLF - PLF x Fak (T), où Fak (T) = f ($n_1$, $n_2$, charge).

5.  Procédé selon la revendication 1, **caractérisé** en ce que la commande de transmission (1) détecte des demandes de couple réduites qui surviennent en raison d'un glissement des roues motrices du véhicule.

6.  Procédé selon la revendication 3, **caractérisé** en ce que pendant une commutation avec recouvrement de deux éléments à friction le couple du moteur est augmenté brièvement au moyen d'une demande de couple accrue (PLF2), de façon à pouvoir compenser une baisse inhérente du couple de sortie ($T_{ab}$).

7.  Procédé selon la revendication 6, **caractérisé** en ce qu'une brève augmentation du couple du moteur à une valeur située au-dessus du couple maximal (100 %) est effectuée au moyen d'une modification de la largeur d'impulsions d'injection du dispositif d'injection de carburant.

8.  Procédé selon la revendication 1, **caractérisé** en ce que l'unité de commande de la transmission (1) détermine à part le pourcentage (PLF) de demande de couple servant de première grandeur de réglage, une pression d'embrayage ($p_K$) des éléments de changement de vitesses, servant de seconde grandeur de réglage, et en ce que le couple de sortie ($T_{ab}$) de la transmission et des durées de glissement ($T_S$) des éléments de changement de vitesses sont influençables indépendamment les uns des autres sur la base des deux grandeurs de réglage (PLF, $p_K$).

**FIG.1**

Ventilansteuerung

1

nT

nab

nM

Last

Temp

Druck Sensoren

3

5

4

3

2

nM

Drosselklappensignal

Motortemperatur

Ansauglufttemperatur

Drosselklappenwinkel

Einspritzimpulsbreite

Zündwinkel

FIG. 2

```
              ┌─────────────────────┐
              │      Routine        │
              │   Momentenfaktor    │
              │     berechnen       │
              └─────────────────────┘
                        │
              ┌─────────────────────┐
              │     holen von       │── S1
              │ nM,nT,Last,nab1,nab2│
              └─────────────────────┘
                        │
              ┌─────────────────────┐
              │  PLFM = f(Messwerte) │── S2
              └─────────────────────┘
                        │
        Nein       ◇ Aktion ◇  ── S3
     ┌────────────────
     │              Ja
┌──────────────┐
│ PLF = PLFM   │── S5
└──────────────┘
   Reduzierung  ◇ Aktionart ◇  Erhoehung
```

**S6** ◇ PLF2 <> 0 ◇ — Ja        Keine        **S6** ◇ PLF2 <> 0 ◇ — Ja

Nein                                         Nein

**S7**
$$T = f(n1,n2,Last)$$
$$PLF2 = PLF - PLF \times Fak(T)$$
$$d\_PLF = f(PLF2,PLF,Last)$$

**S7**
$$T = f(n1,n2,Last)$$
$$PLF2 = PLF + PLF \times Fak(T)$$
$$d\_PLF = f(PLF2,PLF,Last)$$

**S8**
$$PLF_n = PLF_{n-1} - d\_PLF$$

**S8**
$$PLF_n = PLF_{n-1} + d\_PLF$$

**S9** ◇ $PLF <= PLF2$ ◇ — Nein    Nein — **S9** ◇ $PLF >= PLF2$ ◇

ja                                           ja

**S10**
$$PLF2 = 0$$
Aktionart = keine

**S10**
$$PLF2 = 0$$
Aktionart = keine

```
              ┌─────────────────────┐
              │     Rücksprung      │
              └─────────────────────┘
```

10

FIG.3

PLF

110%
100%

50 %

B

A

R

A

PLF2

Zeittakt

t1  t2  t3  t4  t5

Mab

C

D

C

D